# DEMANDE DE BREVET EUROPEEN

(11) **EP 0 600 307 A1**
(43) Date de publication de la demande: **08.06.1994**
(21) Numéro de dépôt: 93118548.2
(22) Date de dépôt: 18.11.1993
(51) Int. Cl.: B44F 1/08, A44C 5/00, B41M 5/28

(54) **Objet en matière plastique dont au moins une partie de la surface extérieure est décorée**

(30) Priorité: 25.11.1992 FR 9214285
(71) Demandeur: Eta SA Fabriques d'Ebauches, CH-2540 Grenchen (CH)
(72) Inventeur: Rey, Michel, CH-2000 Neuchâtel (CH)
(74) Mandataire: de Montmollin, Henri

(57) **Abrégé**

La présente invention concerne un objet, notamment une partie d'un bracelet (21) pour montre, ayant une base (22) formée par un élastomère, une surface extérieure (24) de cette base comportant une décoration (25).

La décoration (25) comprend un motif décoratif (29) réalisé au moins en partie par une encre thermochromique (30) comprenant des cristaux liquides incorporés dans des micro-capsules, cette encre thermochromique étant insérée entre deux couches intermédiaires (26 et 32) formées de matériaux thermofusibles.

## Description

La présente invention concerne un objet en matière plastique dont au moins une partie de la surface extérieure présente un motif décoratif.

Plus particulièrement, la présente invention concerne un objet souple ayant une base formée par des élastomères et une décoration située sur une surface de cette base. L'encre utilisée pour au moins une partie du motif décoratif comporte des cristaux liquides et engendre un effet thermochromique du motif décoratif, c'est-à-dire une variation au moins partielle de la couleur du motif décoratif en fonction de la température de la couche externe de l'objet décoré.

Bien que la présente invention puisse s'appliquer à divers objets, on s'intéresse ci-après plus spécifiquement aux bracelets pour montres.

Pour qu'un bracelet en matière synthétique souple soit jugé de qualité suffisante, il est nécessaire qu'il puisse supporter diverses contraintes physiques. En particulier, on attend d'un tel bracelet qu'il garde ses caractéristiques physiques, notamment sa souplesse, et son aspect initial le plus longtemps possible. Pour cela, il faut notamment qu'il supporte de manière réversible certaines contraintes mécaniques propres à l'utilisation d'une montre-bracelet.

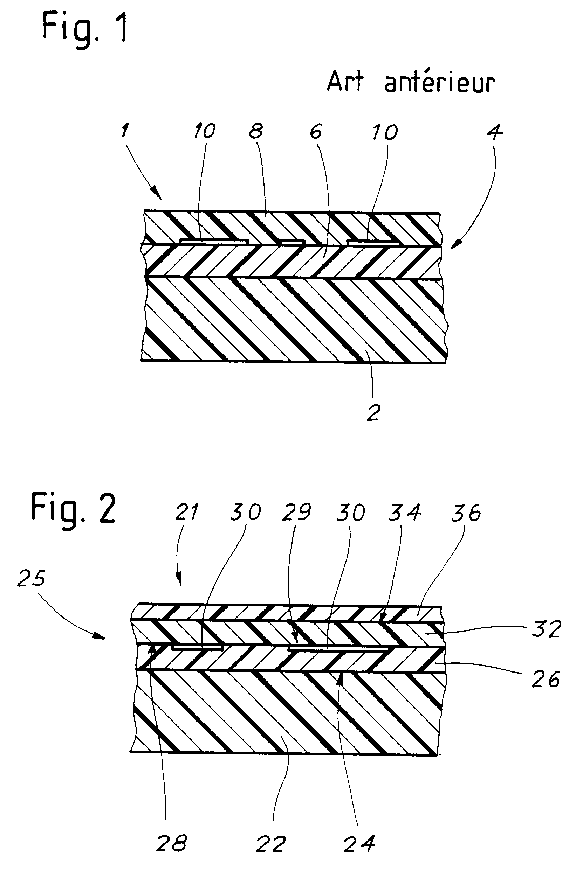

La figure 1, décrivant l'art antérieur, représente un bracelet 1 comprenant une base 2 formée par un élastomère thermoplastique, notamment du chlorure de polyvinyle ou du polyuréthane, sur laquelle est appliquée à chaud une décoration comprenant deux couches minces souples 6 et 8 de chlorure de polyvinyle ou de polyuréthane entre lesquelles est situé un motif décoratif 10.

Dans le cas d'une encre thermochromique comprenant des cristaux liquides contenus dans des micro-capsules, l'utilisation de couches minces souples en chlorure de polyvinyle ou en polyuréthane présente un inconvénient majeur étant donné que les encres à cristaux liquides incorporés dans des micro-capsules présentent une limitation dans le choix des liants.

Les liants appropriés à ces encres thermochromiques adhérent généralement de manière insatisfaisante avec les élastomères thermoplastiques cités ci-avant et utilisés pour la confection de bracelets, c'est-à-dire que l'adhérence des encres thermochromiques avec ces élastomères ne satisfait pas les critères de qualité nécessaires à un bracelet pouvant subir de multiples contraintes physiques propres à son utilisation.

Le but de la présente invention est de pallier l'inconvénient décrit ci-avant en proposant un motif décoratif incorporé dans une structure multicouche appropriée.

La présente invention concerne donc un objet comportant une base, formée par au moins un premier élastomère, et une décoration prévue sur au moins une surface extérieure de ladite base, ladite décoration comprenant une couche de protection et un motif décoratif situé entre ladite base et ladite couche de protection, cet objet étant caractérisé en ce que ledit motif décoratif comprend au moins un dessin primaire formé par au moins une encre thermochromique comportant des cristaux liquides, ladite décoration comprenant une première couche intermédiaire située entre ladite base et ledit dessin primaire et une deuxième couche intermédiaire (32; 58) située entre ledit dessin primaire et ladite couche de protection, ces première et deuxième couches intermédiaires étant formées de matériaux thermofusibles.

Il résulte de ces caractéristiques que l'encre thermochromique utilisée pour le dessin primaire présente une bonne adhérence avec les deux couches intermédiaires et que ces couches intermédiaires adhérent solidement à la base et à la couche de protection, ce qui garantit une bonne cohésion de l'ensemble.

Dans un mode de réalisation particulier de l'invention, le motif décoratif comprend un dessin secondaire situé entre la deuxième couche intermédiaire, adjacente à la couche de protection, et cette couche de protection, les encres utilisées pour ce dessin secondaire étant des encres conventionnelles adhérant correctement à la couche de protection.

Ce mode de réalisation particulier de l'invention permet d'obtenir des effets esthétiques particulièrement intéressants. Il est ainsi possible d'avoir un motif décoratif présentant un dessin primaire thermochromique et un dessin secondaire invariant avec la température et contrastant avec le dessin primaire.

Dans une variante de ce mode de réalisation particulier de l'invention, le dessin primaire est formé par un film recouvrant uniformément la surface décorée.

L'invention sera mieux comprise à l'aide de la description qui va suivre et des dessins qui l'illustrent uniquement à titre d'exemple. Sur ces dessins :
la figure 1, déjà décrite, représente schématiquement une coupe transversale d'une partie d'un bracelet en plastique souple, de l'art antérieur, comprenant un motif décoratif;
la figure 2 représente schématiquement une coupe transversale d'une partie d'un bracelet en plastique souple comprenant un motif décoratif réalisé au moyen d'au moins une encre thermochromique selon un premier mode de réalisation de l'invention;
la figure 3 représente schématiquement un deuxième mode de réalisation de l'invention dans lequel le motif décoratif comprend un dessin primaire réalisé au moyen d'encres thermochromiques et un dessin secondaire réalisé au moyen d'encres conventionnelles;
la figure 4 représente une variante du deuxième mode de réalisation de l'invention dans laquelle le dessin primaire est formé par un film d'encre thermochromique.

En se référant ci-après à la figure 2, on décrira un premier mode de réalisation de l'invention. On remarquera que la coupe transversale d'une partie 21 d'un bracelet représentée sur cette figure 2 est schématique et ne respecte pas les épaisseurs relatives des différents films ou couches représentés.

La partie 21 dudit bracelet comprend une base 22 formée par un élastomère thermoplastique, par exemple du chlorure de polyvinyle ou du polyuréthane. Sur la surface extérieure 24 de cette base 22 est prévue une décoration 25 comprenant une première couche 26 formée par un matériau thermofusible souple. Sur la surface extérieure 28 de cette première couche 26 est imprimé un motif décoratif 29, formant un dessin primaire, au moyen d'au moins une encre thermochromique 30 comprenant des cristaux liquides incorporés dans des micro-capsules. Sur la première couche souple 26 est prévue une deuxième couche 32, formée par un matériau thermofusible souple, qui recouvre le motif décoratif 29, ce dernier étant ainsi inséré entre les première et deuxième couches 26 et 32.

Sur la surface extérieure 34 de la deuxième couche 32 est prévue une couche de protection 36 formée par un élastomère thermoplastique ou par un film de protection approprié.

Ainsi, le motif décoratif 29, réalisé au moyen d'au moins une encre thermochromique comprenant des microcapsules de cristaux liquides, est inséré entre deux couches intermédiaires 26 et 32, formées par des matériaux thermofusibles souples, situées entre une base 22 et une couche de protection 36.

Les matériaux thermofusibles utilisés sont choisis en fonction de leur souplesse et de leur capacité d'adhérer solidement aux élastomères et aux encres thermochromiques utilisées.

Dans un mode de réalisation préféré de l'invention, les matériaux thermofusibles formant les couches intermédiaires 26 et 32 appartiennent à la classe des copolymères base polyamides. Cette classe de matériaux présente une bonne adhérence avec les encres thermochromiques à cristaux liquides et avec les élastomères. Cependant, n'importe quel autre matériau thermofusible présentant les caractéristiques d'adhérence et de souplesse requises est susceptible d'être utilisé dans la présente invention.

Les couches intermédiaires 26 et 32 forment ainsi des interfaces d'adhésion entre les encres thermochromiques et les couches extérieures 22 et 36 formées d'élastomères.

Dans une variante préférée de ce premier mode de réalisation selon l'invention, la base 22 est en polyuréthane, alors que la couche de protection 36 est en chlorure de polyvinyle.

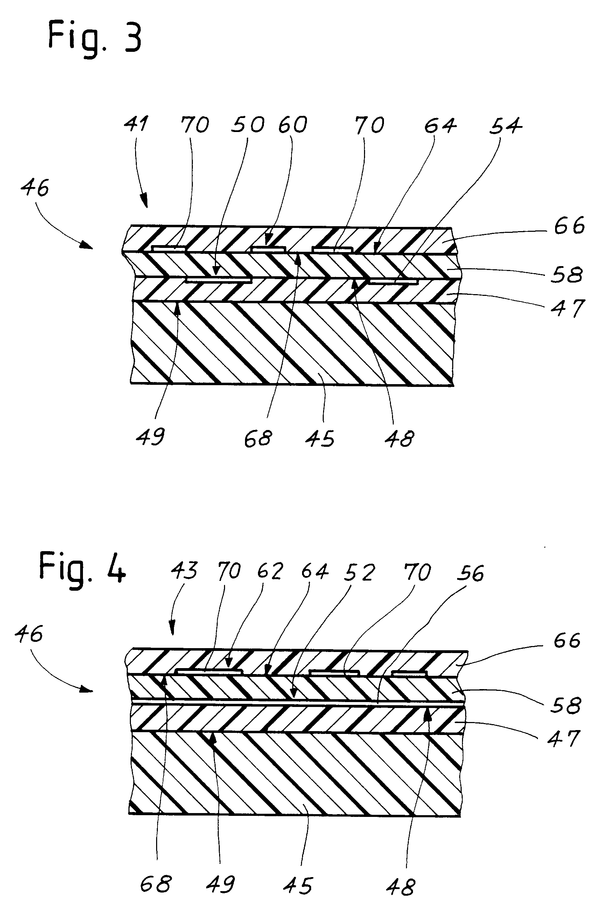

En se référant ci-après aux figures 3 et 4, on décrira des première et deuxième variantes d'un deuxième mode de réalisation d'une partie d'un bracelet décorée en partie à l'aide d'encres thermochromiques selon l'invention.

Dans ce deuxième mode de réalisation, la partie 41, respectivement 43 dudit bracelet comprend une base 45 formée par un élastomère thermoplastique et une décoration 46, située sur au moins une partie 49 de la surface extérieure de la base, comprenant une première couche 47, formée de matériaux thermofusibles similaires à ceux décrits ci-avant, à la surface extérieure 48 de laquelle est imprimé un dessin primaire 50, respectivement 52, lequel est réalisé au moyen d'encres thermochromiques 54, respectivement 56 comprenant des cristaux liquides.

Le dessin primaire 52 de la deuxième variante est formé par un film recouvrant uniformément la surface décorée du bracelet. Dans cette deuxième variante, la deuxième couche 58 de matériaux thermofusibles est située entièrement sur le film 52, d'où la nécessité absolue d'une bonne adhérence de l'encre thermochromique 56 avec les couches intermédiaires 47 et 58.

Etant donné que l'effet thermochromique des encres 54 et 56 nécessite généralement un fond relativement sombre, un dessin secondaire 60, respectivement 62 est imprimé sur la surface intérieure 64 de la couche de protection 66 formée par un élastomère transparent, cette couche de protection 66 étant située sur la surface extérieure 68 de la deuxième couche 58. Toutefois dans une autre variante (non représentée), il est possible de prévoir que le dessin secondaire soit situé entre la base et la première couche intermédiaire.

Le dessin secondaire 60, 62 est réalisé à l'aide d'une encre conventionnelle 70, de préférence d'un ton clair contrasté. Naturellement, le dessin secondaire 60, 62 peut comporter diverses encres imprimées successivement sur la surface interne 64 de la couche de protection 66.

De la même manière, le dessin primaire 50, 52 du deuxième mode de réalisation et le motif décoratif du premier mode de réalisation de l'invention décrit ci-avant peuvent être réalisés au moyen de diverses encres thermochromiques comprenant des cristaux liquides incorporés dans des micro-capsules et présentant des plages de sensibilité différentes, pour autant qu'elles répondent aux critères de compatibilité requis.

Bien entendu, l'homme du métier sera en mesure d'imaginer, à partir de la description qui vient d'être donnée à titre illustratif et nullement limitatif, diverses variantes ne sortant pas du cadre de la présente invention.

Finalement, on notera qu'il est possible dans une variante de l'invention de prévoir une encre à cristaux liquides présentant une transparence dans un de ses états.

## Revendications

1. Objet (21; 41; 43) comportant une base (22; 45), formée par au moins un premier élastomère, et une décoration (25; 46) prévue sur au moins une surface extérieure (24; 49) de ladite base, ladite décoration comprenant une couche de protection (36; 66) et un motif décoratif (29; 50, 60; 52, 62) situé entre ladite base et ladite couche de protection, cet objet étant caractérisé en ce que ledit motif décoratif comprend au moins un dessin primaire (29; 50; 52) formé par au moins une encre thermochromique comportant des cristaux liquides, ladite décoration comprenant une première couche intermédiaire (26; 47) située entre ladite base et ledit dessin primaire et une deuxième couche intermédiaire (32; 58) située entre ledit dessin primaire et ladite couche de protection, ces première et deuxième couches intermédiaires étant formées de matériaux thermofusibles.

2. Objet (21; 41; 43) selon la revendication 1, caractérisé en ce que lesdits cristaux liquides sont incorporés dans des micro-capsules.

3. Objet (21; 41; 43) selon la revendication 1 ou 2, caractérisé en ce que lesdits matériaux thermofusibles formant lesdites première et deuxième couches intermédiaires (26 et 32, 47 et 58) appartiennent à la classe des copolymères base polyamides.

4. Objet (21; 41; 43) selon l'une des revendications précédentes, caractérisé en ce que ladite couche de protection (36; 66) est formée par au moins un deuxième élastomère.

5. Objet (41; 43) selon l'une des revendications précédentes, caractérisé en ce que ledit motif décoratif (50, 60; 52, 62) comprend un dessin secondaire (60; 62) formé d'au moins une encre conventionnelle (70), ce dessin secondaire étant situé entre ladite deuxième couche intermédiaire (58) et ladite couche de protection (66).

6. Objet (43) selon l'une des revendications précédentes, caractérisé en ce que ledit dessin primaire (52) est formé par un film d'encre thermochromique (56) recouvrant uniformément ladite surface décorée (49).

7. Objet selon l'une quelconque des revendications précédentes, caractérisé en ce que ladite couche de protection (36; 66) est formée de chlorure de polyvinyle.

8. Objet selon l'une quelconque des revendications précédentes, caractérisé en ce que ladite base (22; 45) est formée de polyuréthane.

9. Objet selon l'une quelconque des revendications précédentes , caractérisé en ce que ledit objet est une partie d'un bracelet pour montre.
